# EUROPEAN PATENT SPECIFICATION

(11) **EP 2 272 316 B1**
(45) Date of publication and mention of the grant of the patent: **11.04.2018**
(21) Application number: 10153436.0
(22) Date of filing: 12.02.2010
(51) Int. Cl.: A01C 23/00, A01C 23/04

(54) **A mobile system and apparatus for reducing emission and smell from slurry**
Mobiles System und Vorrichtung zur Reduzierung des Schlammausstoßes und Schlammgeruchs
Système mobile et appareil pour réduire l'émission et l'odeur de boue

(30) Priority: 06.07.2009 EP 09164626
(43) Date of publication of application: 12.01.2011
(73) Proprietor: Toft, Morten, 6600 Vejen (DK)
(72) Inventor: Toft, Morten, 6600 Vejen (DK)
(74) Representative: Tellefsen, Jens J.

(56) References cited:
- EP-A1- 0 569 321
- EP-A1- 1 972 189
- GB-A- 1 364 733
- NL-C2- 1 012 650

## Description

### Field of the Invention

The present invention relates to reducing the emission of particular ammonia and hydrogen sulphide from slurry.

### Background of the Invention

Significant amounts of emissions from slurry, particular ammonia but also bad odour obtained from compounds such as hydrogen sulphide are obtained when the slurry is stirred up during distribution to the soil of e.g. an agricultural field.

Currently, countries like Denmark and Holland are introducing legislation to limit emission. Particular of ammonia, which damages nitrogen sensitive nature areas through eutrophication and hydrogen sulphide, which creates a bad odour and becomes increasingly less accepted by the society in general.

In a country like Denmark, 95% of the emissions derive from agriculture such as animal husbandry, particular pigs and cows. The emissions are identified to 3 sources - animal stables, slurry storage facilities and during application of slurry to an agricultural field. The current legislation aims at reducing the emissions from stables (requires reduction of 30%) and storage facility (cover over facility). The coming legislation aims at reducing the application of slurry onto agricultural fields and currently specifies use of injection into the soil on black soil and grassland.

Furthermore, it is known that the fertilizing effect of the slurry is reduced when the slurry is delivered on top of the soil due to volatilisation of primarily ammonia. Traditionally, this has been solved by delivering the slurry into the soil by making a furrow, placing the slurry into the furrow and covering the slurry with soil. However, it is power-demanding to draw a large number of harrow teeth and slurry covering mechanisms through the soil, hereby reducing the working width of the slurry tanker, whereby the working time is increased. Furthermore, the overall demands to the construction of the slurry tanker are increased.

The reduced operational width of the slurry tanker increases the working time to distribute the slurry. Thus, it necessitates that the slurry tanker drives between the tracks ordinarily used for field work e.g. when distributing artificial fertilizer, when spraying with pesticides or other. Driving between the standard tracks can reduce the yield from the field with up to 5 %.

There are multiple technologies available to the different sources of emission to limit or eliminate the emission:

| **Stable** | Acidification | Air scrubbers | Ozone | Slurry cooling | Less slanted area |
|---|---|---|---|---|---|
| **Storage** | Acidification | Natural crust | Burned Clay granulats | Plastic hexagon plates | Canvas tent cover |
| **Field** | Acidification | Injection | Bandspreading + cultivation | | |

As can be seen, acidification is the only technology that covers all three sources. When the slurry pH is lowered, the ammonia is converted into ammonium which does not evaporate. The reasons for the multiple types of technologies are economical, which includes the need of material for biogas production as well as inconvenience and potential danger of handling large amounts of acid.

The slurry cannot be acidified before the fermentation process if it is to be used for biogas production. To maintain the viability of the methane producing bacteria in the slurry, the pH is to be kept above 6.8. Furthermore, the production of biogas commonly increases the pH value of the slurry from pH 7 to around pH 8. Thus, if biogas is part of the slurry chain, acidification must take place during application.

In the event that the slurry has been degassed, it is much more vulnerable to emission since the pH of the slurry is increased by degassing. With biogas, the emission from the slurry is increased from approximately 10% to 40% when the pH value is increased from pH 7 to pH 8. Hence, acidification has a much larger effect as it is possible to eliminate the emission from ammonia during application. Since there are much more ammonia in the degassed slurry, the economy of acidification is also improved.

Further advantages are obtained by acidification during application of the slurry. First, not all slurry to be used for distribution must be acidified. If the slurry is used for spring crops such as spring barley or maize (estimated 30% of all slurry) there is no reason to acidify as the slurry will be injected into the soil before or during seeding in the spring. Hence, slurry can be unnecessarily acidified by biogas plants, which is uneconomically.
Second, the slurry contains a huge pH buffer due to its organic content. If the slurry is lowered to for example pH 6, it will return to a higher pH level than before the acidification within 100 hours. This means that the slurry pH must be lowered to below 5.5 to be storage proof. The economical level of emission reduction is between 6 and 6.5 and thus it is an added cost to reduce the slurry pH to 5.5.

From US patent 3,966,450 it is known to add mineral acid to the slurry to lower the pH value of the slurry in order to reduce the emission of ammonia from the slurry.
However, acidification of large amounts of slurry demands large amounts of acids. The handling of large amounts of mineral acid as well as the process of adding acid to slurry is hazardous due to the chemical properties of the acid as well as the development of heat and gas during the mixing of slurry.

From EP 0 569 321 A1 and NL C 1012650 it is known to inject acid into slurry just before the distribution of the slurry. The acid tank is positioned on or in the slurry tanker. The acid is thus to be manually poured or pumped into the acid tank, which is both dangerous and time consuming. Furthermore, the coupling of the acid tank with the slurry tanker puts a significant extra load onto the slurry tanker, which reduces the capacity of the slurry tanker to transport slurry. Thus, extra travels are to be performed in order to distribute a certain amount of slurry.

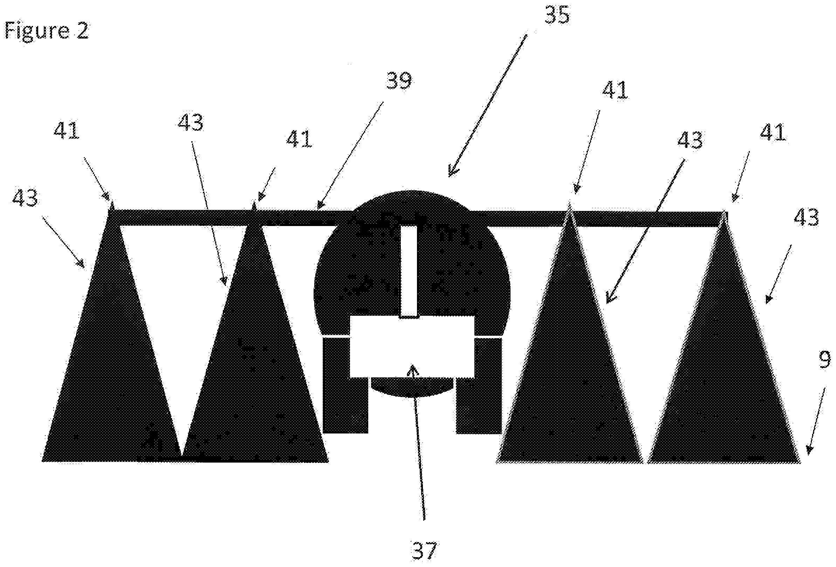

EP 1 972189 A1 discloses a similar system in which the position of the acid tank is not discussed in detail, except in fig. 2, which also discloses an acid tank, which is provided in the slurry tanker, in particular in the rear end of the slurry tanker.

### Object of the Invention

It is the object of the present invention to create a simple and safe system and method for handling large amounts of acid to be used for reducing emission of volatile substance in order to solve the above mentioned problems.

### Description of the Invention

These problems are addressed by the following invention. A mobile system for reducing emission of a slurry, such as a liquid manure, where said mobile system is mounted on a pulling vehicle, such as a tractor or a truck, and comprises
- a slurry tanker in liquid communication with
- means for adding/injecting an acid into said slurry, where said slurry tanker and/or means for adding/injecting an acid into said slurry is in communication with
- distributing means for allowing a reduced emission slurry to be placed on the application site and where said means for adding/injecting the acid into said slurry comprises an acid tank, where said acid tank is arranged as a front tank on said pulling vehicle.

Said front tank is shielded by an enclosure. Said mobile system further comprises one or more pH sensors.

It should be emphasised that throughout the application the term "slurry" is to be interpreted as any kind of liquid manure, organic fertilizer, sludge or similar liquids or semi-liquids in the form of a watery mixture of primarily insoluble matter.

Furthermore, it should be emphasised that throughout the application the term "application site" is to be interpreted as any kind of field, ground or the like, wherein the fertilizing and/or nutritive qualities of the slurry is utilized.

Throughout the application the term emission reduced substance is to be interpreted as the product resulting from the process of treating slurry with at least acid.

By emission from the slurry is to be interpreted as emission primarily of ammonia but also of other fertilizing, nutritive or smelling substances of the slurry.

In order to obtain a system that changes the properties of the slurry, what is needed is means for injecting/adding acid to the slurry together with ability to store the slurry before modifying it and means for distributing it to the application site. Furthermore, communications e.g. in the form of tubes are needed for the system to function properly. The components of means for injecting/adding acid and means for distributing can be retrofitted onto existing machinery like a slurry tanker and a mobile vehicle capable of pulling said slurry tanker preferably a tractor.

It is emphasized that slurry tanker is to be understood as any tank capable of comprising slurry and to communicate with means for injecting/adding acid and means for distributing the emission reduced substance (modified slurry) to the application site.

The slurry is normally being applied from the storage tank to a field 2 - 8 times during the season. The storage tanks normally have between 1000 to 5000 m³ capacity. It is very difficult to add the acid to such a huge amount and to mix it evenly.

Further, when adding the acid to the slurry, it results in a significant lowering of the pH in the slurry. However, when allowed to remain in the storage tank for more than 24 hours after the application of acid, the pH buffer in the slurry organic substance will be activated and eventually result in a higher pH value than before the acid treatment. It is therefore necessary to treat the slurry in the process of application from the storage tank to the field.

Adding acid to slurry can be very dangerous as an instant development of CO₂ and heat takes place. If the acid would be added during filling of the container of the slurry tanker, the CO₂ would create a lot of foam and limit the amount of slurry that can fit into the tank, alternatively, it could create such a pressure that the tank could break.

In order to prevent any potential damage to the slurry tanker and create potential explosive situations, the acid can be added to the slurry during application to the field.

Injecting the acid directly into- or near the pump is therefore advantageous in that it gets to be evenly mixed into the slurry and transported directly to the application site without any danger. However, the acid pump/acid injection can be arranged at several positions along the pathway of the slurry from the slurry pump and to the means for distribution as long as the acid is not injected into the slurry tanker.

The mobile system is advantageously mounted to a mobile vehicle whereby it can be transported not only to the application site but also around at the application site. As an example the mobile unit can be a tractor, a truck or any other vehicle capable of moving the mobile system.

Thus, the farmer only needs to buy additional equipment and not whole new machinery for the distribution system to function.

The amount of acid to be used ranges from 10 to +100 litres pr. Ha. When using acid to reduce the pH value of the slurry, there are substantial personnel risqué involved as acid is extremely corrosive and is classified as dangerous goods. When distributing the slurry, the amounts of acid used has a great variance and can be very significant, depending on the pH value of the slurry and the intended emission reduction. Variances can be from ½ L to 10 L pr. m³ slurry.
As a normal application rate is between 20 to 40 m³ slurry pr. ha and the slurry tankers often work 24 hours a day during the peak season, this results in a capacity of app. 2500 m³ slurry pr. 24 hours and a consumption of between 1250 L to 25.000 L. acid. A common used sulphur acid has a density of 1.84 g/cm³.

Normally, a slurry tanker already carries a load of 15 to 25 ton of slurry and since the total weight pr. axle cannot exceed 10 ton, the slurry tanker often exceeds the legal weight limits for driving on public roads.

It is therefore of outmost importance that the slurry tanker only carries a small amount of acid. Furthermore, the logistics of providing the slurry tanker with enough acid, must take as little time as possible and at the same time must be totally safe to handle.

It is also very important that this task can be performed by one person only, as the driver of the tractor very often will be without assistance from others.

In this process, it is very important that the logistic chain does not expose the personnel to unnecessary risqué. The system therefore comprises a front tank container that is designed to be transported to a place of filling - manufacture of acid, harbour or other filling place, where maximum security can be observed during the filling of the tank. The potential hazardous task of filling the front tank with acid is therefore no longer the responsibility of the tractor driver. He will simply lift the tank into position in the front of the tractor. The front tank is then connected to the means for adding/injecting acid and the acid can safe and securely be transported from the front tank to the place of acid injection, where the acid is mixed with the slurry.

The acid containing front tank can beneficially be arranged in an enclosure designed to be arranged in front of a mobile vehicle such as a tractor and comprising an opening through which the tank filled with acid can be arranged either moving the tank into place by using a fork-lift truck or by pushing or wheeling the tank into the cage when the enclosure is arranged just above the ground. The enclosure can after installation of the acid tank be elevated into a given position above the ground and kept in this position during further transportation. The opening of the enclosure can be either at the top of the enclosure or at the bottom of the enclosure.

The opening of the enclosure can be sealed by a gate, which can for example be pushed away or in front of the opening in order to open or close the opening, or the gate can be connected to the enclosure by hinges. The gate is preferably made of bars but it can be made from any material for example material similar to that of the enclosure as long as the opening can be sufficiently closed in order to prevent the tank filled with acid to be lost from the enclosure.

Arranging the tank filled with acid in an enclosure is advantageously because the enclosure can be composed in a manner, which enables the tank filled with acid to be protected against accidents during transportation e.g. the enclosure is collision proof.

Large amounts of acid can hence be transported without risk for the environment, persons etc.

The acid tank can be arranged on a tractor connected to and in front of the slurry tanker. This invention describes a pallet lifter with a three point linkage for a front lift on a tractor. This type of linkage is advantageous due to the flexibility, which allows the connection to be rock and the possibility of raising and lowering the acid tank/pallet tank. This enables the acid tank to be easier replaced. However, the acid tank and/or the pallet lifter can be arranged on the front of e.g. a tractor by any possible connection as long as the connection is safe and secure e.g. the acid tank is not damaged or lost during transport. The mobile system is in liquid communication with a slurry tanker via tubes and pipes.

Biogas systems are currently being installed in big numbers. Germany has + 4000 units and in Denmark the government has announced a strategy of degassing 50% of all slurry by 2020. The mobile system for acidification holds a huge advantage as it is possible for the farmer to adopt a strategy of biogas and later acidification of the slurry as well as acidification in the stable. He may also choose between own investment or buy in as a service from a contractor.

Advantageously, the mobile system is either an original equipment manufacturer (OEM) or a retrofit system, which can be mounted onto various known vehicles like slurry tankers. Thus, the system is highly compatible with the equipment already available in e.g. farms and is, thus, economical feasible for the farmer.

In an advantageous embodiment, the overall system comprises besides a tractor and a slurry tanker: a safe front tank system for a tractor to transport the acid to the application site, means for acid logistics injection of acid near or in the pump of the tank for distributing slurry or in the pipe leading the acid to the distributor, a system to measure the pH value of the slurry (units for measuring of volume, an online pH measuring unit) in order to identify the amount of acid needed to comply with current legislation on limits of emission, system to document (terminal or documentation unit) the effect on the acid and hereby the emission from the from the slurry, an on-off safety unit, and anti-theft protection.

The pH sensors can be fitted to the mobile system in one or more places. Preferably, one or two pH sensors can be fitted to the mobile system. By using two pH sensors they can be placed before and after the injection/addition of acid resulting in a measurement of the effect of added acid, and the amount of acid can be adjusted by knowledge of the pH before and after the treatment in combination with knowledge regarding the volume of slurry to be treated.

One pH sensor measurements can be performed at the beginning of the slurry composition and multiply during the addition of acid. The multiple measurements can be performed as a point-measurement at specific times like once every fifteen seconds, every thirty seconds, every one minute or once every five minutes or the pH-value can be measured continuously. Thus, when a specific pH-value of the slurry mixed with acid is reached the addition of acid can be either stopped manually by the person operating the mobile system or stopped automatically by the mobile system when reaching a predefined pH-value.

Additionally, the final pH-value can be theoretically determined after measuring the pH-value of the slurry before acid addition and knowing the flow of the slurry to be distributed. Furthermore, the season and the type of animal from which the slurry derives along with the type and pH of the acid is to be entered into in a computer unit in order to calculate the flow of acid.

This is highly beneficial since the correct amount of acid can be supplied. Too low an amount would lead to insufficient lowering of pH and an insufficient amount of NH₃ would be changed to NH₄⁺. Thus, the volatile NH₃ would still be emitted. Adding to much acid is economically insufficient as well as the handling of large amount of acid is troublesome. Hence, it is important to find the correct balance between too much and too little acid added.

The pH-sensor is preferably arranged after a distributor comprised within the distributing means, in order to result in the most reliable measurements. Thus, extra connecting tubes are preferably arranged in the mobile system leading the emission reduced substance from the distributor to the pH-sensor, which is arranged at the slurry tanker, before the emission reduced substance is distributed to the application site.

In a further advantageous embodiment said mobile system further comprises at least one additional tank; where said at least one additional tank is arranged next to said front tank, preferably integrated in said enclosure. In a still further advantageous embodiment said mobile system further comprises at least one sensor able to measure the content of said at least one additional tank and/or said acid tank.

The mobile system can beneficially be equipped with at least one additional tank or container for the transport of additives to be added to the slurry or the emission reduced substance. The additional tanks or containers can be arranged next to the acid tank for example one on either side of the acid tank. The additional tanks can be either integrated in the enclosure i.e. containers are arranged in separate or partly separate compartments next to the acid tank or the additional tanks can be arranged on the outside of the enclosure possibly attached to the enclosure by a locking mechanism.

Preferably, one of the tanks contains water, and is arranged next to the acid tank. The water can be used for cleaning the system after the acidification process of the slurry. In order to purified and rinse the tubes and connections of the mobile system. Hereby, it is prevented that small amounts of acids remains in the tubes of the mobile system and can be change involve a risk for the handling of the mobile system by involving risks of leaking acid on the person handling the system, form gases or possibly corrode part of the system. This is of course a greater risk if the mobile system only is used for a short period each year.

Furthermore the expected life time of the sensors are prolonged if they are rinsed with water after use. Especially the pH sensor can be damaged by prolonged contact with slurry and the expected life time of the pH sensor is thus highly increased by the creation of a watery environment during the resting periods i.e. when the mobile system is not used.

The entrance for the water into the mobile system can be either through the same connection and tube through which the acid enters the system or it can be through a different tube. If it is the same connection and tube the connection is preferably a dry clutch and arranged in a way that the connection is easily transferred from the dry clutch connection of the tank filled with acid and the contained comprising water. If it is different connections and tubes the pumping of acid or water are independent either by one or separate pumps. However, the pumping of either acid or water is controlled preferably automatic since the mixing of strong acids with water can be highly dangerous. Preferably, the pumping can be controlled from a common computer unit with a common interface coordinating all of the interactions and measurements of the mobile system.

It is to be understood that the content of the additional tanks can be other components than water for example ferrous sulphate but that the pumping mechanism and coupling to the overall system is similar to the mechanisms described for water. Though other components like ferrous sulphate can be mixed into the slurry together with acid and can be controlled by measurements of the amount component necessary to change the overall composition of the slurry to values for example given by governmental directives

In a further advantageous embodiment said mobile system further comprises one or more sensors able to measure the amount of Nitrogen, Phosphor and/or Potassium in the slurry. In a still further advantageous embodiment said mobile system further comprises a GPS unit with a log function or a GPS unit with a log function and a wireless mobile phone module such as a GSM connection.

As an option, the system comprises one or more sensors for measuring the NPK contend of the slurry or at least one of the components Nitrogen, Phosphor, and Potassium. This is beneficial since the amount of each component is important for the proper growth of the plants on the field. In addition, the amount needed varies with the soil type as well as the crops. Knowledge of the composition of the slurry to be treated is an advantage which can be obtained with GPS and a wireless mobile phone module such as a GSM connection integrated in the system.

Advantageously, a GPS unit with a log function or a GPS unit with a log function and a wireless mobile phone module such as a GSM connection to store the data on a remote server is combined with the mobile system. A number of countries, like Denmark and Holland, have introduced legislation to limit the emission from application of slurry. In order to manage the legislation, a demand for documentation of the reduction of emission is required and can be provided by the GSP unit with a log function as well as a wireless mobile phone module such as a GSM connection.

Furthermore, in order to optimise the economical beneficial amount of acid to be used, it is necessary to know the amount of nitrogen in the slurry. The level of nitrogen can vary between different slurries, but also within a single slurry storage tank according to how well the slurry has been mixed prior to distribution. Hence, measurement of each batch of slurry is preferred.

The level of nitrogen can be measured through an external NIR sensor system or it can be integrated in the control system of the slurry tanker. Measuring the amount of nitrogen in the slurry on the fly enables the system to distribute the emission reduced substance according to kg N pr. Ha rather than m³ slurry pr. Ha. As each tank load has a varied amount of kg N pr. Ha, this is a great advantage in order to distribute the ideal amount of nutrients which is part of the emission reduced substance. Algorithms in the system will then determine whether the needed amount of acid will only comply with current legislation or more acid should be added in order to optimise the economical benefit. This will optimise the yield - and thus economy - and reduce the potential leaching of nutrients to the waterways that causes environmental damage.

In the event that the slurry is being applied to an agricultural field, the legislators require documentation of the pH value at the time of application in order to approve of the acidification technology. It is thus an advantage to have the system integrated in the application system (slurry tanker) as the system already has the needed pH measurement and documentation equipment.

In an advantageous embodiment said mobile system further comprises foam generating means; said foam generating means turns said slurry into foam, preferably using a compressed air foam system or an air aspirated foam system, and where said foam generating means are arranged in communication with said distributing means.

In some embodiments, it is advantageous to generate foam in addition to injecting acid. The foam is formed from all of the slurry to be distributed. The foam slowly releases the slurry to a liquid form, enabling the soil to absorb all of the nutrients from the slurry in the place where it was intended and creating good economy through plant growth where it was intended and reduce the potential environmental impact caused by surplus nutrients. Thus, foam advantageously prevents the run-off effect often observed when adding liquid slurry or liquid slurry in combination with foam onto undulated and inclined grounds. Furthermore, foam reduces the volatilization of unwanted volatile substances like NH₃ because the bobble structure of the foam causes the diffusion rate of the volatile substance to be lowered, hereby diminishing the diffusion.

Changing the slurry into foam by beating gas into the slurry by a compressed air foam system (CAFS) or by adding acid e.g. by injection to the slurry. Acid can be injected before or after the foam has been created. However, adding acid at first possibly results in a beneficial effect since the mixing of acid and slurry creates heat and increased pressure, whereby a decreased amount of pressure is needed in order to create foam. Thus, less power is needed for foam creation.

In addition, multiple CAFS equipments are today capable of generating two or more separate streams where the physical characteristics of the foam differs e.g. a fine and a coarser bobble structure. After generating the different types of foams these can be gathered into one stream within the CAFS equipment and as such be transported to the means for distributing. Due to the nature of the foam the foams comprising different physical characteristics do not mix. Thus, at the application site the more coarse foam ends up closest to the ground while the finer foam ends up on top of the coarse foam. Furthermore, the foam can be made by a mechanical process such as injection of a gas, where said process is selected from one of the following: injecting air or another gas into said slurry; or by beating air or another gas into said slurry; or by depressurising said slurry e.g. by using a compressed air foam system or an air aspirated foam system.

In an aspect of the invention, the foam drain time is maximised with intend of creating a foam coating of the field. This will have an effect much like a greenhouse and serve as a growth enhancement for the plants, as the soil temperature rises under the protective foam. Instead of applying the slurry in one pass with 20 - 40 ton pr. Ha, several passes with smaller amounts of slurry are made over a number of days, potentially eliminating the use of plastics in open air agricultural or horticultural operations.

Also the layer of foam will potentially reduce the turbulence of the atmosphere resulting from wind and thus significantly reduce evaporation of water from the field. The amount of moisture available to plants is a critical factor, especially in the early growth stages where the slurry is often applied and can result in significant higher yield.

In a further advantageous embodiment, said mobile system further comprises connecting means for transporting said acid from said mobile system to said slurry in a slurry channel or a front tank.

The mobile system can be used as an acid provider to directly add acid into the slurry of either slurry channels or in a front tank. In this system, the acid is transported from the acid tank in front of the mobile unit and through connecting means e.g. a hose, a tube etc. connected to the mobile system. The connecting means preferably follows along the crane arm of the slurry tanker and is lowered together with this into the slurry channel or the front tank. Alternatively, connecting means can be lowered into the slurry separate from the crane arm and can be distributed independently from the crane arm. In this manner, the acid can be pumped into the slurry with no other mixing than the ordinary transport of the slurry in the slurry channel or the mixing in the front tank.

The connecting means connected to the crane arm of the slurry tanker or a similar mechanism allows for additional mixing of the slurry and the acid and see to that the acid is properly mixed with the slurry. It prevents the formation of large amounts of acid to be collected in minor area, which should be avoided for safety reasons. Additionally, the continuously movement of the slurry in the slurry channels results in that the mobile system need only to be transported to one place in the stable and from here the entire slurry in the slurry channels can be acidified. After reaching a given pH of the slurry in the slurry channel or the front tank, the crane arm or the connecting means can be removed from the slurry and the mobile system can be used for other purposes like acidification of slurry for the distribution on fields or to lower the pH of the slurry channels or front tank(s) in another stable.

In order to be able to use the mobile system on more farms an additional function is preferably present in the mobile system. At the end of each job or at the end of a job where the mobile system is to be used in another farm, the system is decontaminated in order to prevent contamination between the farms. This can be performed by filling the slurry tanker with slurry, lowering the pH of the slurry to pH 0-2 and circulate the acidified slurry for a given time, preferably at least ½ hour before emptying the slurry tanker into the slurry channels, the front tank or distributing it to the field. Hereby, contamination between farms can be greatly prevented and additional cleaning of the mobile system can be lowered to a minimum.

Alternatively, the mobile system has means for taking the slurry out of the stable, inject acid into the slurry and return the slurry to the stable. In an aspect of the invention, said apparatus further comprises extracting means for extracting said portion of said slurry from said slurry channel and/or said slurry storage tank.

Slurry can be pumped from the slurry channels or a slurry collection tank e.g. by means of a crane arm, where the slurry is transported to from the slurry channels or a slurry collection tank via tubes or a similar mechanism into the slurry tanker equipped with the mobile system. The slurry is now treated with acid in order to decrease the pH and instead of distributing the slurry mixed with acid onto a field. The emission reduced substance is transported back to the slurry channels via tubes connected to the slurry channels and the mobile system.

The advantage of the mobile system is that the stable does not need to invest in any permanent infrastructure for an injection system and to be exposed to storage of acid on the premises. In many cases, the farm will already have a slurry tanker, and can thus increase the use of the slurry tanker, as it is normally only used during a 2 month period of the year.
A normal slurry tanker has a capacity of loading and reloading 20 m³ slurry in 10 minutes. With an average 1000 m³ slurry in the stable, the process of acidification should be only 8 hours and the process - depending on pH value - should not be repeated more than once a month.

If the farm does not have a slurry tanker, it can use a contract slurry applicator. This would have the same beneficial effect on the economy, as this function would be above the normal use of a slurry tanker and prolong the season as well as being used far more often. In particular, it would save the farmer a costly investment, which for many small farm operations will not be sustainable.

There is also the advantage in using a mobile acidification system in older stables. Since they may not have a very long time to return the investment, it may be a great advantage to buy the acidification as a service instead of investing a lot of money in a permanent infrastructure. It can be that the farmer has more than one production unit and with an investment in a mobile system, he can acidify slurry in all units with just one investment.

This invention further describes an automatic pH-sensor system comprising a mobile system where said automatic pH-sensor system further comprises a pH sensor; said pH sensor is arranged in connection with a slurry in a slurry channel, where said pH sensor measures a pH-value of said slurry and where said pH sensor further is in communication with a warning system, said warning system comprises a computer unit.

The mobile system has means of measuring the pH in the slurry, which is normally between 6.5 and 7.5 pH. The mobile system then lowers the pH to a level below 6 pH. At a level of approximately 5.5 pH, the emission of ammonia from the slurry is reduced to 0. The slurry pH can then be reduced to a level below the optimal pH 5.5 in the slurry channels. In the following weeks, the pH in the slurry channels will gradually increase again through the addition of slurry in the slurry channels. When the pH has returned to a level of pH 6 or above, it is time to repeat the process.
Advantageously, a pH-sensor can be arranged in connection with the slurry channel in order to measure the gradual change in pH. When the pH reaches a certain level of for example pH 6 or another predetermined pH value determined by the temperature in the stable and the composition of the slurry as well as the maximal emission of for example ammonia allowed or wanted, a warning is signalled either to the farmer or to a contractor that it is time to acidify the slurry in the channels once again. The warning can be any kind of message though a SMS-message or an e-mail is preferred.
The pH-sensor can either communicate continuously to a computer unit or at specific time points, sending the pH-value of the slurry by wireless communication, whereafter the computer unit correlates the actual pH-value with the pH-value which is predetermined. When the actual pH-value is higher than the predetermined pH-value an e-mail or an SMS is sent to a predetermined address or an alarm in form of a sound or a light can be switched on. Alternatively, the pH-value can be checked manually.
The computer unit can be integrated into the pH-sensor or it can be a separate unit.

This invention further describes a method for reducing emission of volatile substances such as ammonia from slurry by a mobile system as previously described where said method comprises the following steps
a) transporting acid from a detachable front tank mounted at the front of a pulling vehicle, such as a tractor or a truck; and
b) adding said acid to said slurry to form an emission reduced substance, wherein said amount of acid added to the slurry is calculated by a computer unit on the basis of, and preferably continuously adjusted, by one or more measurements of pH obtained by one or more pH sensors. The means for generating said emission reduced substance comprises tubes and flow systems for transporting the slurry to the means for adding/injecting acid, where the slurry is modified into an emission reduced substance.

In the process of generating an emission reduced substance for distributing onto the field or for distributing into slurry channels or front tanks. The mobile system is the slurry tanker and the mobile pulling vehicle such as a tractor or a truck. A tank filled with acid is arranged as a detachable front tank on the mobile pulling vehicle, possibly inside an enclosure. The acid tank is connected to the tubes of the mobile system. The acid is then pumped via tubes along the mobile pulling vehicle and to the slurry tanker, where the acid is mixed with slurry pumped from the slurry tanker. Hereby, the emission reduced substance is formed.

The process of creating the emission reduced substance can advantageously be produced substantially during the delivery to said application site. Thus, the slurry inside the distribution tank is not modified and no additional equipment is to be introduced into the slurry tanker itself. Equipment for treating the slurry is to be arranged at the outlet of the slurry tanker or at an additional position outside the distribution tank. Hence, the equipment can be arranged on ordinary slurry tankers.

Furthermore, in the method, said amount of acid added to the slurry is calculated by a computer unit on the basis of, and preferably continuously adjusted, by one or more measurements of pH obtained by one or more pH sensors.

Lowering the pH value to obtain less emission from slurry is well known. However, slurry from different animals as well as different batches of slurry from the same slurry tanker will vary in their pH value to start with, as well as their response to the added acid. Thus, the amount of acid necessary in each case will differ for example with type of animal, season, storage time of slurry, mixing and feeding. Adding to much acid is costly as well as it increases the potential risk of transporting and handling it. Advantageously, the pH of the slurry and/or the emission reduced substance can be measure one or more times in order to adjust the amount of acid added to the composition.

The process can advantageously be automatic by measuring both the before, after and/or multiply measured pH values. This enables algorithms to adjust the amount of acid automatically and preferably gradually according to a preset pH value. The targeted value can either be given by a government determined level of emission, or reduction of emission or it can be as a result of an economical beneficial level, where the saved amount of ammonium is optimised for plant growth.

When adding acid to slurry, there is a potential explosive hazard, as a significant amount of heat and CO₂ is generated in the process. It is therefore important that the injection of acid takes place in the process of application of slurry to the field or under highly controlled circumstances. The position of the injection pump and control of the volume of acid as well as start and stop of injection is therefore very important in order to avoid any dangerous situations.

Furthermore, a method is described where an additive is added to said slurry or said emission reduced substance after changing all said slurry into said emission reduced substance, where said additive is oxygen, ozone, hydrogen peroxide, a ferrous sulphate solution, or bacteria.

In an aspect of the invention, one or more additives can be added to said slurry or said emission reduced substance. The additive can be one or more components from the groups of odour reducing agents, odour masking agents, oxidising and/or deodorizing agents. Examples are oxygen, ozone, hydrogen peroxide, ferrous sulphate solution, extracted slurry protein, different strains of bacteria or mineral acids like sulphuric acid, phosphoric acid, hydrochloric acid, nitric acid, boric acid, hydrofluoric acid, hydrobromic acid, hydrochloric acid, or various organic acids like formic acid, acetic acid, oxalic acid, citric acid, or lactic acid.

Oxygen, ozone and hydrogen peroxide are commonly known additives for reducing odours of slurry and can beneficially be combined with the emission reduced substance either before or after the change of the slurry into the emission reduced substance. Hereby, not only the emission of volatile substance from the slurry is inhibited but also the odour. This is highly advantageous for the environment.
Ferrous sulphate can be added in order to decrease e.g. the amount ofphasphate in the slurry. Thus, the slurry distributed to the field is lowered in phosphate content close to sensitive natural areas like lakes.

Different types of mineral acids can be added to the slurry or emission reduced substance. Preferably, sulphuric acid is chosen due to the low costs and that the acid value of the acid. Sulphuric acid comprises two positively charged hydrogen ions, causing a high ability to lower the pH value, and change ammonia to ammonium (NH₃ to NH₄⁺). Ammonium cannot evaporate through diffusion like ammonia and will be held by the soil through its positive charge and as such is one of the best fertilizers available.

Bacteria are known to be able to metabolise several types of products e.g. they are known to be able to reduce the smell of slurry by metabolising components hereof. Advantageously, the lactic bacteria can be added but other strains of bacteria can be suitable as well.

Furthermore, a method is described where said method comprises an additional step, where said emission reduced substance is turned into foam.

In an advantageous method the emission reduced substance is created from a liquid portion of said slurry, where some or all solid matter of said slurry has been removed. This can be performed by a filtering system or a system centrifuging the slurry. This particular treatment is especially beneficial when foam is to be created because solid matter in the slurry can obstruct with the process of creating foam.

Foaming equipments such as CAFS (compressed air foam system) have the ability to create different types of foam with different bubble sizes and drain time and is excellent for the creation of foam as an emission reduced substance.

Two or more streams of emission reduced substances can be created with different physical properties in order to promote a low emission of volatile substance and allow the nutrients to be absorbed by the soil.

In an aspect of the invention, the foam application could be divided into two foam streams, where the first foam stream has a course bubble structure that does not last long and in which there is no additive in the slurry and the second foam stream is a much finer bubble structure and treated with acid and/or additives. Alternatively, both streams can be treated with acid and/or additives.

The finer foam is placed on top of the course foam. This will enable a reduced amount of additive as not all of the foam is treated and as the finer foam structure has a longer drain time. It will improve the emission reduction as it will have a longer drain time and thus a longer effect on emission reduction. At the same time, it will prevent the run-off effect of slurry on undulated ground.

In a further advantageous method, finer foam can be arranged at the sides of the course foam as well as on top of the foam. This can perform an efficient encapsulation of the course foam and further prevent volatilisation of compound when the course foam is drained.

In an aspect of the invention, the course and the fine foam is mixed and distributed through the same system. After application to the soil, the fine foam will continuously have a longer drain time and will be left after the course foam is soaked into the soil, eventually leaving a film of low pH liquid on the surface, enabling a much longer effect of the emission reduction.

As an alternative, one or more of the streams can be created by addition of different types of emulsifier(s) added to the emission reduced substance. Hereby, the emission reduced substance is kept at the place of application for sufficient time for the nutrients of the emission reduced substance to be absorbed by the ground. As an example the emulsifier can be a surfactant.

Furthermore, a method is described where said emission reduced substance is distributed to an application site.

The so formed emission reduced substance is then transported by the distribution means of the slurry tanker to the application site. As an example, the emission reduced substance can be transported in tubes to a distributor, which can be specifically designed or be a distributor as already present on ordinary tanks for containing slurry. Thus, the distributor can be of a form, which distributes the slurry/emission reduced substance by broad spreading through one nozzle, broad spreading through a boom with two to 100 nozzles or by placing the slurry/emission reduced substance at the application site through tubes hanging vertically from a bar.

Furthermore, a method is described where said method further comprises steps of transporting said acid into a slurry channel or a front tank. Still further, a method is described where said slurry further is oxidised.

The mobile system can be connected to a slurry channel in a stable or to a front tank in order to lower the pH of the slurry. Acid is transferred from the front tank via the mobile system and through the connecting into the slurry of the slurry channel or the front tank. The emission of particularly ammonia from the slurry channels and the front tank is thus significantly decreased.

In addition, the acidification of slurry from slurry tanks can be combined with an oxidation of the slurry in order to increase the effect of the acid. The oxidation can either be performed in the slurry tanker or in an additional chamber inserted into the slurry and can be performed either before or after the acidification. If the oxidation is to be performed on the slurry tanker, slurry is pumped into the slurry tanker, preferably by means of the crane arm and oxidised by oxidising means e.g. a compressor. The oxidising means being part of the mobile system. After oxidation the oxidised slurry is returned to the slurry channel or the front tank. If the oxidation is to be performed in an additional chamber this chamber is connected with the oxidising means on the mobile system e.g. via tubes. Slurry is pumped into the additional chamber, oxidised and pumped out of the additional chamber. Preferably, the additional chamber and the connection to the oxidising means are attached to the crane arm.

Furthermore, the slurry from the slurry channels can be treated with additional components such as ozone, ferrous sulphate, hydrogen peroxide in order to obtain not only an ammonia emission reduced substance but also an odour emission reduced substance. The additional components are preferably part of the enclosure at the front of the tractor. However, they can as well be added from a tank next to the mobile system. They can be added either into the slurry tanker or mixed with the slurry when it is pumped form the slurry tanker.

Furthermore, a method is described where said method comprises an automatic warning step, where said automatic warning step comprises sub-steps of
a) measuring pH of a slurry of a slurry channel leading to a pH-value
b) communicating said pH-value to a computer unit
c) alternatively, correlate said pH-value with a threshold value and inform a provider regarding need for acid treatment, if said pH-value is above said threshold.

The pH of the slurry in the slurry channels can thus be lowered by treatment in the mobile system. However, due to the continuous filling of the slurry channels from the animals and due to the organic content of the slurry channels the pH increases over time and so does the emission. Thus, the process of changes the pH of the slurry channels is to be repeated.

Advantageously, a method can be used where the pH of the slurry channel is point-wise or continuously measured by a pH-sensor. By point-wise measurement the pH sensor is beneficially elevated from the slurry, rinsed and kept in a moistures environment until the next measurement is to take place. After measuring the pH of the slurry the pH-value is saved on a computer unit, where it alternatively can compare the pH-value with a predetermined value.

### Description of the Drawing

- fig. 1: illustrates a slurry distributor system with tubes as seen from the side,
- fig. 2: illustrates a slurry distributor system with nozzles as seen from the back,
- fig. 3: illustrates a mobile system with a front tank,
- fig. 4: illustrates a side-front view of a front tank,
- fig. 5: illustrates a side view of a front tank,
- fig. 6: illustrates a top view of a closed front tank,
- fig. 7: illustrates a mobile system connected to a slurry channel in a stable
- fig. 8: illustrates a crane arm lowered into a slurry for mixing with acid
- fig. 9: illustrates a crane arm lowered into a slurry for mixing with acid and oxygen
- fig. 10: illustrates a crane arm lowered into a slurry for pumping the slurry into the slurry tanker for mixing with oxygen and returning to the slurry channel for mixing with acid.

### Detailed Description of the Invention

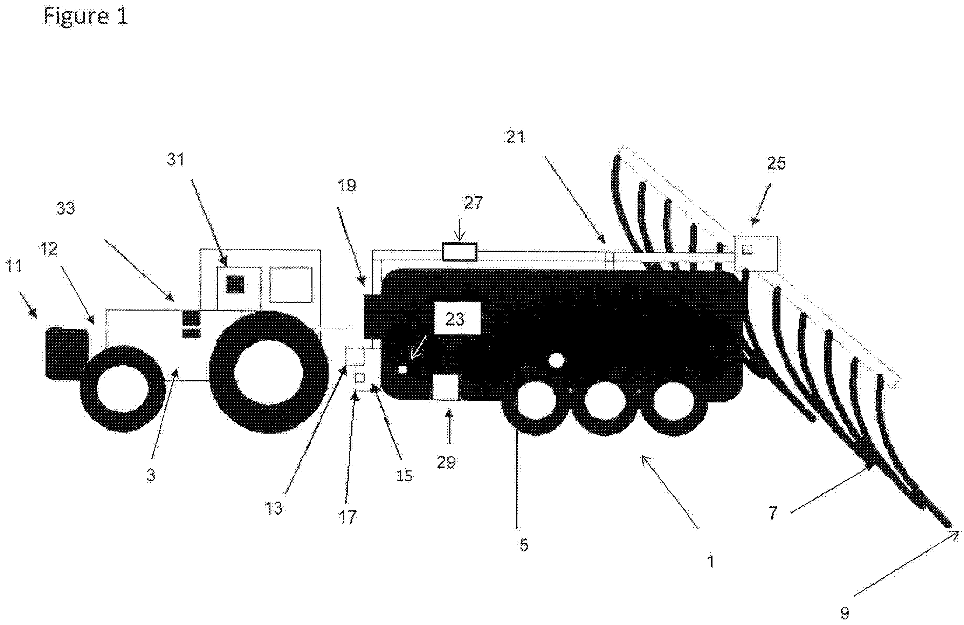

A slurry distributor system 1 is illustrated in fig. 1. This slurry distributor system 1 comprises a tractor 3 connected with a slurry tanker 5. The slurry tanker 5 is of the type where the distribution of the slurry is performed through a multiple of tubes 7 for addition of the slurry onto the field (application site) 9.

The tractor 3 and the slurry tanker 5 is equipped with one embodiment of the mobile system. At the front of the tractor 3 an acid tank 11 is arranged, which is connected via a pipe system 12 to an acid pump 13 in combination with a slurry pump 15. As the acid must not be accidentally injected into the tank containing slurry 5, the acid pump 13 works together with a RPM sensor 17 to be coordinated with the activity of the slurry pump 15, a flow of a flow sensor 19 is flowing, and/or a recirculation sensor 21 is set to application to field.

The mixture of acid with slurry is then transported past the flow sensor 19 and the recirculation sensor 21 before the emission reduced substance is distributed to the field 9 through the multiple tubes 7.

The mobile system further comprises pH sensors 23, 25 in order to regulate the amount of acid injected. In this particular illustration two pH sensors are present, one 23 for measuring the pH of the untreated slurry, and one 25 for measuring the pH of the slurry after addition of slurry.
The amount of acid to be pumped into the slurry can as well be determined through the flow sensor 19 alone or in combination with one or both pH sensors 23, 25. Further adjustment of the amount of acid pumped into the slurry can be performed by a NIR system 27, which measures the amount of nitrogen, which in connection with the pH value calculates the percentage of NH₃ versus NH₄⁺. Depending on these measurements more or less acid can be added to the slurry.

All data communication on the system is managed through the ECU - Electronic communication Unit 29 and controlled by an operator interface system, which is controlled from the terminal unit 31. The terminal unit 31 can be either integrated into the tractors existing interface system or retrofitted.

A fleet management unit 33 can further be installed to the system in order to improve documentation. The fleet management unit 33 can contain a positioning system, telecommunication ability and log function, monitors the operation and stores the information on a card and sends the data on-line to a server that provides the needed documentation to the authorities.

Figure 2 illustrates another embodiment of a slurry tanker 35. The slurry tanker 35 contains at the back CAFS equipment 37 for injecting air into the slurry. It is to be emphasized the CAFS equipment 37 can as well be arranged at alternative places on the slurry tanker 37 as well as it can be alternative types of foam generating means. The slurry tanker 37 is further equipped with a bar 39 with four nozzles 41. However, the bar may comprise more or less nozzles. From the nozzles 41, foam 43 is distributed to the application site 9.

Though not illustrated the slurry tanker 37 in figure 2 can as well comprise all or some of the equipment as described for the embodiment illustrated in Figure 1.

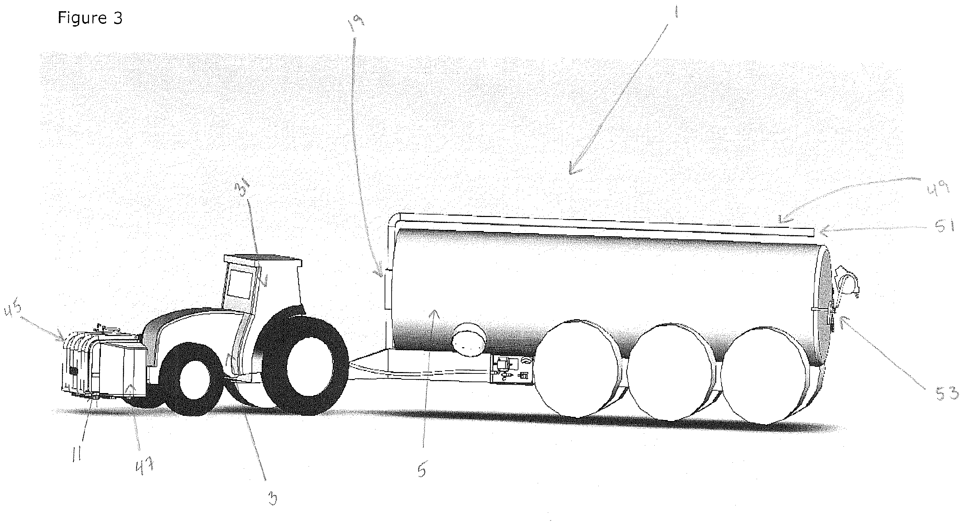

Figure 3 illustrates an embodiment of the mobile system 1 comprising a different composition of components than illustrated in figure 1. The mobile system 1 is mounted onto a tractor 3 connected to a slurry tanker 5. A front tank 11 is arranged at the front of the tractor 3 and contains an acid tank in an enclosure secured with gate comprising bars 45. The front tank 11 further comprises an additional container on either side of the acid tank. In this illustration only one of the additional containers 47 are visible. The additional container 47 can be filled with water for cleaning the tubes/and or pipes 49 of the mobile system 1 or additives to be added to the slurry along with acid. The water or the additive can be filled directly into the additional container 47 or a smaller container containing the water or the additive can be placed into the additional container 47.

A terminal unit 31 such as an Isobus terminal is arranged in the driver's cab and can be either integrated into the tractors existing interface system or retrofitted. In this manner, all data communication can be operated from one area and the amount of acid mixed with slurry can be controlled in order to obtain the most optimal fertilization. This can as well be coupled with GPS-equipment in coordination with knowledge of the soil in order to obtain the most optimal fertilization for this particular piece of land.

The content of the front tank 11 is connected via tubes and/or pipes 49 to the slurry tanker 5 whereby the acid is transported from the front tank 11 and to a static mixer 51 for mixing slurry with acid. The mobile system further comprises a pH sensor 53 in order to regulate the amount of acid injected. In this particular illustration one pH sensor is present, which measures the pH of the slurry before acid is added and continuously during the addition of acid. The addition of acid is then stopped either automatically when a given pH-value is reached correlating with a predefined pH-value or the user can manually stop the acid-injection at a given pH-value. The lifetime of the pH-sensor 53 can be enhanced by cleaning the pH-sensor 53 with water from the additional container 47 at the end of the fertilization process.
The amount of acid to be pumped into the slurry can as well be determined through the flow sensor 19 alone or in combination with the pH sensor 53.

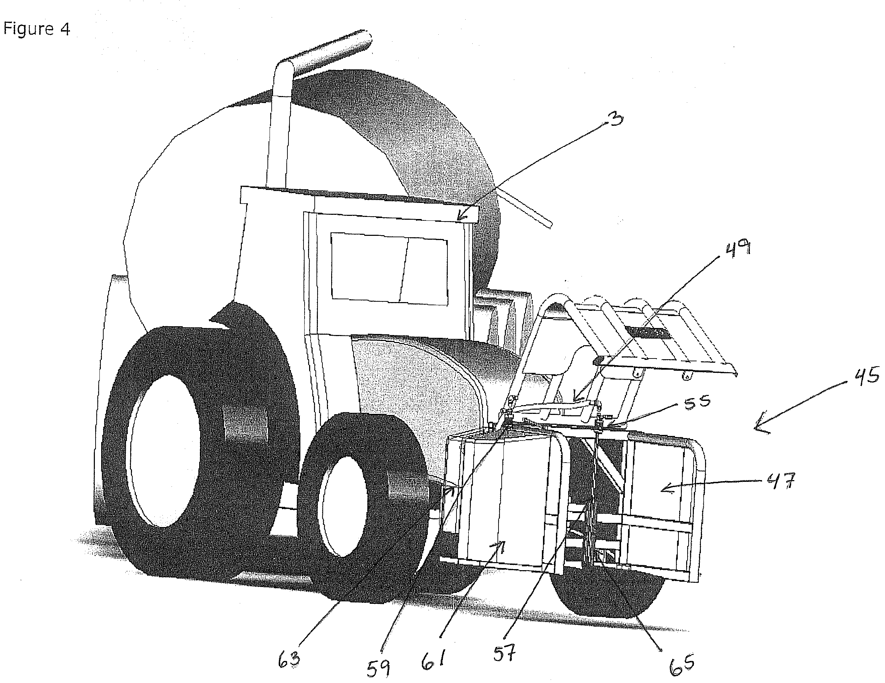

Figure 4 illustrates a closer view of the front tank 11 arranged on the front of the tractor 3. The enclosure with a gate comprising bars 45 is open and illustrates an opening where an acid tank can be arranged. Furthermore, a dry clutch 55 is shown, which can be fitted to the connecting pipes and tubes 49 of the system and to an acid tube 57 for fitting into the acid tank. A second dry clutch 59 is furthermore present on the second additional container 61, to enable the movement of the pipes and tubes 49 to be moved from the acid tank to the second additional container 61. Similarly, but not visible, a third dry clutch is present on the first additional container 47, which enables movement of the pipes and tubes 49 to be moved from the acid tank to the first additional container 47. The dry clutches can preferably be locked in order to prevent the user to accidentally be harmed by the content of the containers.

In addition, a GPS/wireless mobile phone module 63 such as GPS/GSM is arranged on the front tank 11 together with a first additional container 47. On the acid tube 57 a sensor is arranged 65, which registers the content of the acid tank. Sensors can additionally be present on the first 47 and second 61 additional containers in order to register the content and presence of these.

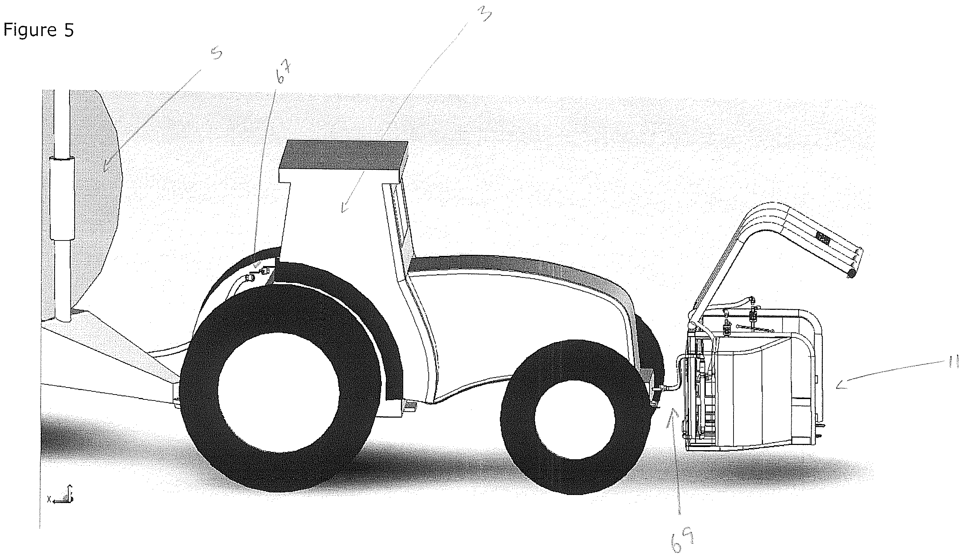

Figure 5 illustrates a side view of the tractor 3 combined with a front tank 11 and a slurry tanker 5. At the rear end of the tractor 3 a fourth dry clutch 67 is present, which connects the pipes and/or tubes 49 of the mobile system between the tractor 3 and the slurry tanker 5. Furthermore the three-point connection 69 between the front lift 11 and the tractor 3 is observed.

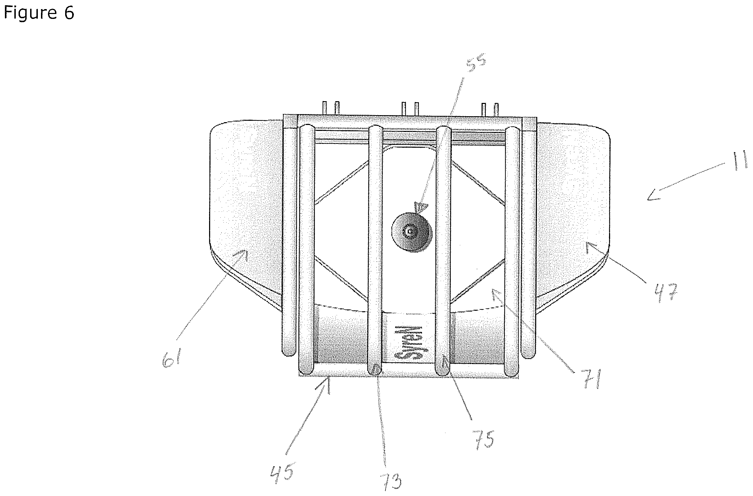

Figure 6 illustrates a top view of a front tank 11. The enclosure with a gate comprising bars 45 is closed and includes an acid tank 71. The first dry clutch 55 is observed between two of the bars 73, 75. In addition, a first additional container 47 and a second additional container are illustrated 61. The enclosure with a gate comprising bars 45 provides efficient support against damage to the acid tank 71 when closed and thus, results in a safe method of transporting large amounts of acid.

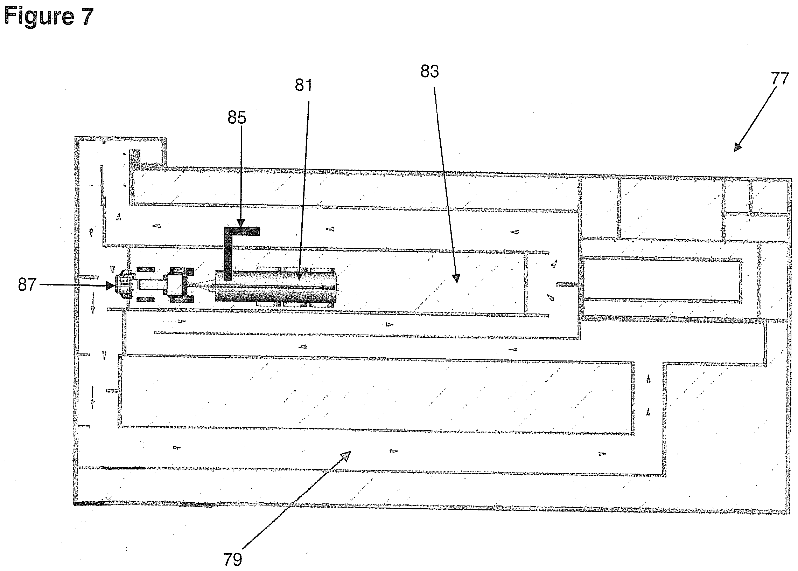

Figure 7 illustrates a stable 77 comprising a slurry channel system 79 as normally observed in stables for cows and cattle. The overall principle of the mobile system can be used for other stable systems e.g. for stables for pigs though the connection between the mobile system and the slurry channels can be slightly different.

In this stable 77, the mobile system connected to a tractor 81 is driven into the stable 77 e.g. on the feed alley 83. The crane arm 85 of the mobile system present on the slurry tanker of the mobile system is lowered into the slurry of the slurry channels 79 and acid is transferred from the front tank 87 of the mobile system 81 via tubes and the crane arm 85 into the slurry of the slurry channel 79. Due to the flow of the slurry of the slurry channels 79 all of the slurry in the slurry channels 79 is mixed with acid entered into the slurry channels from the mobile system. Hereby, the emission of e.g. ammonia is lowered directly and easily.

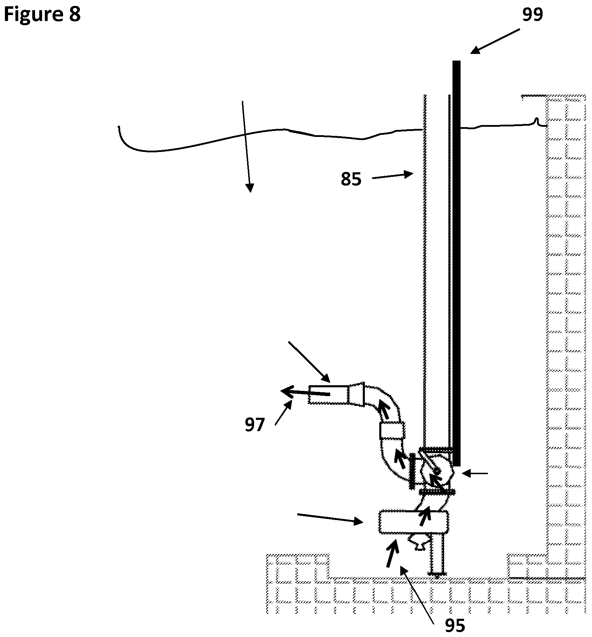

Figure 8 illustrates a crane arm 85 lowered into slurry 89 in a slurry channel or a front tank. The crane arm 85 comprises a three-way valve 93 for change between mixing slurry or pumping slurry to the slurry tanker and a pump 91. In this illustration, the crane arm 85 pumps slurry from the slurry channel or front tank 95, past the three-way valve 93 and the static mixer 101 and out 97 into the slurry channel or front tank along the arrows of the illustration. Acid from the mobile system is added to the slurry 89 via a hose 99 connected with the mobile system and hereby the front tank.

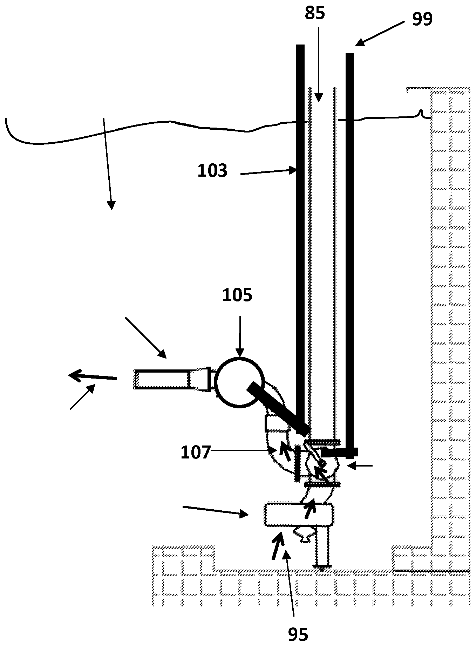

Alternatively, the crane arm 85 further comprises a pipe for compressed air for oxidation 103 and an oxidation chamber 105 as illustrated in figure 9. Hereby, acid is mixed with the slurry 89 at the three-way valve 93 whereafter the acid-mixed slurry 107 is transferred into the oxidation chamber 105, where the acid-mixed slurry 107 is oxidised in order to optimise the effect of the acid.

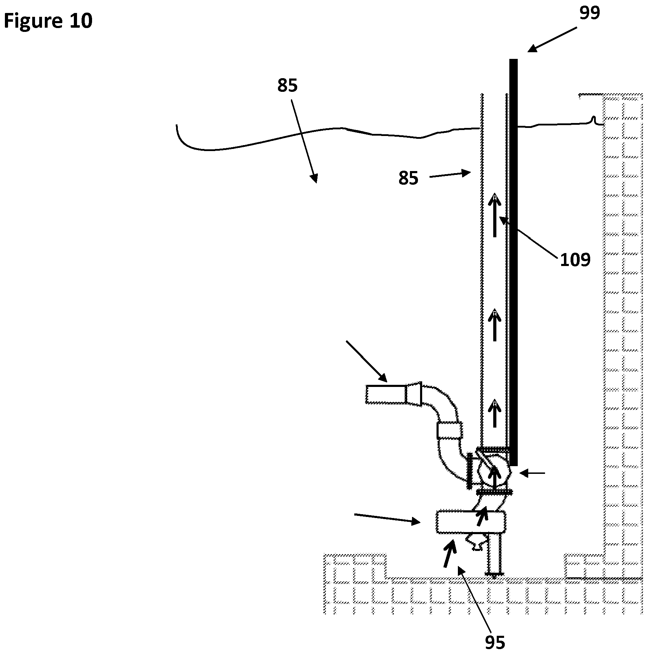

As an additional alternative to figure 8 and figure 9, the slurry 89 is pumped from the slurry channel or front tank, as illustrated in figure 10, into the slurry tanker of the mobile system connected with e.g. a tractor where it is oxidised through recirculation in the tanker and by adding oxygen through a compressor. The slurry 89 is then returned to the slurry channel or front tank through the crane arm 85 in a direction opposite of the arrows 109 till it reached the tree-way valve 93, where the three-way valve 93 is shifted in order to direct the oxidised slurry past the static mixer 101. Acid is added to the slurry via the hose 99 either before or after the slurry 89 has been oxidised in the slurry tanker.

## Claims

1. A mobile system (1) for reducing emission of a slurry, such as a liquid manure, where said mobile system (1) is mounted on a pulling vehicle (3), such as a tractor (3) or a truck, and consists of
- a slurry tanker (5, 35) in liquid communication with
- means (11,12,13) for adding/injecting an acid into said slurry, where said slurry tanker (5) and/or means (11,12,13) for adding/injecting an acid into said slurry is in communication with
- distributing means (7) for allowing a reduced emission slurry to be placed on the application site (9) wherein said means (11,12,13) for adding/injecting the acid into said slurry comprises an acid tank (11), and wherein said mobile system further comprises one or more pH sensors (23, 25, 53), **characterised in that** said acid tank (11) is arranged as a front tank on said pulling vehicle (3), and said front tank is shielded by an enclosure.

2. The mobile system for reducing emission of a slurry according to claim 1, **characterized in that** the enclosure comprises an comprising an opening through which a detachable acid tank (11) can be arranged in the enclosure, such as by moving the tank into place by using a fork-lift truck or by pushing or wheeling the tank into the enclosure.

3. The mobile system for reducing emission of a slurry according to any of the preceding claims **characterised in that** said mobile system (1) further comprises at least one additional tank (47); where said at least one additional tank (47) is arranged next to said front tank (11), preferably integrated in said enclosure.

4. The mobile system for reducing emission of a slurry according to any of the preceding claims **characterised in that** said mobile (1) system further comprises one or more sensors (27) able to measure the amount of Nitrogen, Phosphor and/or Potassium in the slurry.

5. The mobile system for reducing emission of a slurry according to any of the preceding claims **characterised in that** said mobile system further comprises a GPS unit (63) with a log function or a GPS unit with a log function and a wireless mobile phone connection.

6. The mobile system for reducing emission of a slurry according to any of the preceding claims **characterised in that** said mobile system (1) further comprises foam generating means (37); said foam generating means turns said slurry into foam, preferably using a compressed air foam system or an air aspirated foam system, and where said foam generating means are arranged in communication with said distributing means (7, 39, 41).

7. The mobile system for reducing emission of a slurry according to any of the preceding claims **characterised in that** said mobile system (1) further comprises connecting means (85) for transporting said acid from said mobile system (1) to said slurry in a slurry channel or a front tank.

8. An automatic pH-sensor system comprising a mobile system according to any of the preceding claims 1-7 **characterised in that** said automatic pH-sensor system further comprises a pH sensor; said pH sensor is arranged in connection with a slurry in a slurry channel or a front tank, where said pH sensor measures a pH-value of said slurry and where said pH sensor further is in communication with a warning system, said warning system comprises a computer unit.

9. A method for reducing emission of volatile substances such as ammonia from slurry by a mobile system (1) according to any of the claims 1-7 **characterised in that** said method comprises the following steps
c) transporting acid from a detachable front tank (11) mounted at the front of a pulling vehicle (3), such as a tractor or a truck, and;
adding said acid to said slurry to form an emission reduced substance, wherein said amount of acid added to the slurry is calculated by a computer unit on the basis of, and preferably continuously adjusted, by one or more measurements of pH obtained by one or more pH sensors.

10. The method for reducing emission of volatile substances according to claim 9, **characterised in that** an additive is added to said slurry or said emission reduced substance after changing all said slurry into said emission reduced substance, where said additive is oxygen, ozone, hydrogen peroxide, a ferrous sulphate solution, or bacteria.

11. The method for reducing emission of volatile substances according to any of the claims 9-10 **characterised in that** said method comprises an additional step; in which additional step said emission reduced substance is turned into foam.

12. The method for reducing emission of volatile substances according to any of the claims 9-11 **characterised in that** said emission reduced substance is distributed to an application site.

13. The method for reducing emission of volatile substances according to any of the claims 9-12 **characterised in that** said method further comprises steps of transporting said acid into a slurry channel or a front tank.

14. The method for reducing emission of volatile substances according to claim 13 **characterised in that** said slurry further is oxidised.

15. The method for reducing emission of volatile substances according to claim 14 **characterised in that** said method comprises an automatic warning step, where said automatic warning step comprises sub-steps of
d) measuring pH of a slurry of a slurry channel leading to a pH-value
e) communicating said pH-value to a computer unit
f) alternatively, correlate said pH-value with a threshold value and inform a provider regarding need for acid treatment, if said pH-value is above said threshold.

## Patentansprüche

1. Ein mobiles System (1) zum Reduzieren der Emission eines Schlamms, wie zum Beispiel einer Gülle, wobei das mobile System (1) an einem Zugfahrzeug (3), wie etwa einem Traktor (3) oder einem Lastkraftwagen, montiert ist uns aus folgendem besteht:
- ein Schlammtanker (5, 35) in Flüssigkeitsverbindung mit
- Mittel (11, 12, 13) zum Hinzufügen/Einspritzen einer Säure in den Schlamm, wobei der Schlammtanker (5) und/oder die Mittel (11, 12, 13) zum Hinzufügen/Einspritzen einer Säure in den Schlamm mit folgendem in Verbindung stehen:
- Verteilermittel (7), um zu ermöglichen, dass ein Schlamm mit reduzierter Emission auf der Applikationsstelle platziert wird (9),
wobei die Mittel (11, 12, 13) zum Hinzufügen/Einspritzen der Säure in den Schlamm einen Säuretank (11) umfasst, wobei das mobile System ferner einen Säuretank umfasst und wobei das mobile System weiterhin einen oder mehrere pH-Sensoren umfasst (23, 25, 53), **dadurch gekennzeichnet, dass** der Säuretank (11) als Fronttank an dem Zugfahrzeug (3) angeordnet ist und der Fronttank durch ein Gehäuse abgeschirmt ist.

2. Mobiles System zum Reduzieren der Emission eines Schlamms nach Anspruch 1, **dadurch gekennzeichnet, dass** das Gehäuse eine Öffnung umfasst, durch die ein abnehmbarer Säuretank (11) in dem Gehäuse angeordnet werden kann, wie zum Beispiel durch Bewegen des Tanks unter Verwendung eines Gabelstaplers oder durch Schieben oder Drehen des Tanks in das Gehäuse hinein.

3. Mobiles System zum Reduzieren der Emission eines Schlamms nach einem der vorhergehenden Ansprüche, **dadurch gekennzeichnet, dass** das mobile System (1) ferner mindestens einen zusätzlichen Tank (47) umfasst; wobei der mindestens eine zusätzliche Tank (47) neben dem Fronttank (11) angeordnet ist, vorzugsweise in dem Gehäuse integriert ist.

4. Mobiles System zum Reduzieren der Emission eines Schlamms nach einem der vorhergehenden Ansprüche, **dadurch gekennzeichnet, dass** das mobile System ferner einen oder mehrere Sensoren (27) umfasst, die in der Lage sind, die Menge an Stickstoff, Phosphor und / oder Kalium in dem Schlamm zu messen.

5. Mobiles System zum Reduzieren der Emission eines Schlamms nach einem der vorhergehenden Ansprüche, **dadurch gekennzeichnet, dass** das mobile System ferner eine GPS-Einheit (63) mit einer Logfunktion oder eine GPS-Einheit mit einer Logfunktion und einer drahtlosen Mobiltelefonverbindung umfasst.

6. Mobiles System zum Reduzieren der Emission eines Schlamms nach einem der vorhergehenden Ansprüche, **dadurch gekennzeichnet, dass** das mobile System (1) des ferner eine Schaumerzeugungseinrichtung (37) umfasst; wobei die Schaumerzeugungseinrichtung den Schlamm in Schaum umwandelt, vorzugsweise unter Verwendung eines Druckluftschaumsystems oder eines Luftaspirationsschaumsystems, und wobei die Schaumerzeugungseinrichtung in Verbindung mit den Verteilermitteln (7, 39, 41) angeordnet ist.

7. Mobiles System zum Reduzieren der Emission eines Schlamms nach einem der vorhergehenden Ansprüche, **dadurch gekennzeichnet, dass** das mobile System (1) ferner Verbindungsmittel (85) zum Transportieren der Säure von dem mobilen System (1) zum Schlamm in einem Schlammkanal oder einem Fronttank umfasst.

8. Automatisches pH-Sensorsystem umfassend ein mobiles System nach einem der vorhergehenden Ansprüche 1 bis 8, **dadurch gekennzeichnet, dass** das automatische pH-Sensorsystem ferner einen pH-Sensor umfasst; wobei der pH-Sensor in Verbindung mit einem Schlamm in einem Schlammkanal oder einem Fronttank angeordnet ist, wobei der pH-Sensor einen pH-Wert des Schlamms misst und der pH-Sensor weiterhin mit einem Warnsystem in Verbindung steht, wobei das Warnsystem eine Rechnereinheit umfasst.

9. Verfahren zum Reduzieren der Emission flüchtiger Substanzen, wie Ammoniak, aus Schlamm durch ein mobiles System (1) nach einem der Ansprüche 1-7, **dadurch gekennzeichnet, dass** das Verfahren die folgenden Schritte umfasst:
c) Transportieren von Säure aus einem abnehmbaren Fronttank (11), der an der Front eines Zugfahrzeugs (3), wie ein Traktor oder Lastwagen, angebaut ist, und Zugabe der Säure zum Schlamm, um eine emissionsreduzierte Substanz zu bilden, wobei die Menge an Säure, die dem Schlamm zugegeben wird, durch eine Rechnereinheit auf der Grundlage von einem oder mehreren Messungen des pH-Werts, der von einem oder mehreren pH-Sensoren erhalten wird, berechnet wird und vorzugsweise kontinuierlich eingestellt wird.

10. Verfahren zum Reduzieren der Emission von flüchtigen Substanzen nach Anspruch 9, **dadurch gekennzeichnet, dass** ein Additiv dem Schlamm oder der emissionsreduzierten Substanz nach Änderung des gesamten Schlamms in die emissionsreduzierte Substanz zugegeben wird, wobei das Additiv Sauerstoff, Ozon, Wasserstoffperoxid, eine Eisen(II)-sulfatlösung oder Bakterien ist.

11. Verfahren zum Reduzieren der Emission flüchtiger Substanzen nach einem der Ansprüche 9-10, **dadurch gekennzeichnet, dass** das Verfahren einen zusätzlichen Schritt umfasst; in welchem zusätzlichen Schritt die emissionsreduzierte Substanz in Schaum umgewandelt wird.

12. Verfahren zum Reduzieren der Emission flüchtiger Substanzen nach einem der Ansprüche 9-11, **dadurch gekennzeichnet, dass** die emissionsreduzierte Substanz an eine Applikationsstelle verteilt wird.

13. Verfahren zum Reduzieren der Emission flüchtiger Substanzen nach einem der Ansprüche 9-12, **dadurch gekennzeichnet, dass** das Verfahren ferner Schritte zum Transportieren der Säure in einen Schlammkanal oder einen Fronttank umfasst.

14. Verfahren zur Verringerung der Emission von flüchtigen Substanzen nach Anspruch 15, **dadurch gekennzeichnet, dass** der Schlamm ferner oxidiert ist.

15. Verfahren zum Reduzieren der Emission von flüchtigen Substanzen nach Anspruch 14, **dadurch gekennzeichnet, dass** das Verfahren einen automatischen Warnschritt umfasst, wobei der automatische Warnschritt die folgenden Unterschritte umfasst:
d) Messen des pH-Werts eines Schlamms in einem Schlammkanal, der zu einem pH-Wert führt
e) Übermitteln des pH-Werts an eine Rechnereinheit;
f) als Alternative, Korrelieren des pH-Werts mit einem Schwellenwert und Informieren eines Anbieters hinsichtlich der Notwendigkeit einer Säurebehandlung, falls der pH-Wert über dem Schwellenwert liegt.

## Revendications

1. Système mobile (1) pour réduire l'émission d'une boue, telle qu'un lisier, dans lequel ledit système mobile (1) est monté sur un véhicule de traction (3), tel qu'un tracteur (3) ou un camion, et consiste en
- une tonne à lisier (5, 35) en communication liquide avec
- des moyens (11,12,13) pour ajouter/injecter un acide dans ladite boue, ladite tonne à lisier (5) et/ou des moyens (11,12,13) pour ajouter/injecter un acide dans ladite boue est en communication avec
- des moyens de distribution (7) pour permettre à une boue d'émission réduite d'être placée sur le site d'application (9)
dans lequel lesdits moyens (11,12,13) pour ajouter/injecter l'acide dans ladite boue comprennent un réservoir d'acide (11), et ledit système mobile comprenant en outre un ou plusieurs capteurs de pH (23, 25, 53), **caractérisé en ce que** ledit réservoir d'acide (11) est agencé en tant que réservoir avant sur ledit véhicule de traction (3), et ledit réservoir avant est protégé par une enceinte.

2. Système mobile pour réduire l'émission d'une boue selon la revendication 1, **caractérisé en ce que** l'enceinte comprend une ouverture à travers laquelle un réservoir d'acide détachable (11) peut être disposé dans l'enceinte, par exemple en mettant le réservoir en place en utilisant un chariot élévateur à fourche ou en poussant ou en faisant rouler le réservoir dans l'enceinte.

3. Système mobile pour réduire l'émission d'une boue selon l'une quelconque des revendications précédentes **caractérisé en ce que** ledit système mobile (1) comprend en outre au moins un réservoir supplémentaire (47); ledit au moins un réservoir supplémentaire (47) est disposé à côté dudit réservoir avant (11), de préférence intégré dans l'enceinte.

4. Système mobile pour réduire l'émission d'une boue selon l'une quelconque des revendications précédentes **caractérisé en ce que** ledit mobile (1) comprend en outre un ou plusieurs capteurs (27) capables de mesurer la quantité d'azote, de phosphore et/ou de potassium dans la boue.

5. Système mobile pour réduire l'émission d'une boue selon l'une quelconque des revendications précédentes **caractérisé en ce que** ledit système mobile comprend en outre une unité GPS (63) avec une fonction logarithmique ou une unité GPS avec une fonction logarithmique et une connexion de téléphone mobile sans fil.

6. Système mobile pour réduire l'émission d'une boue selon l'une quelconque des revendications précédentes **caractérisé en ce que** ledit système mobile (1) comprend en outre un moyen générateur de mousse (37); ledit moyen générateur de mousse fait tourner ladite boue en mousse, de préférence à l'aide d'un système de mousse à air comprimé ou d'un système de mousse aspiré par l'air, et lesdits moyens générateurs de mousse sont agencés en communication avec lesdits moyens de distribution (7, 39, 41).

7. Système mobile pour réduire l'émission d'une boue selon l'une quelconque des revendications précédentes **caractérisé en ce que** ledit système mobile (1) comprend en outre des moyens de liaison (85) pour transporter ledit acide depuis ledit système mobile (1) à ladite boue dans une rigole à purin ou dans un réservoir avant.

8. Système de capteur de pH automatique comprenant un système mobile selon l'une quelconque des revendications précédentes 1 -7 **caractérisé en ce que** ledit système de capteur de pH automatique comprend en outre un capteur de pH; ledit capteur de pH est disposé en liaison avec une boue dans une rigole à purin ou un réservoir avant, ledit capteur de pH mesurant une valeur de pH de ladite boue et ledit capteur de pH étant en outre en communication avec un système d'avertissement, ledit système d'avertissement comprend une unité d'ordinateur.

9. Procédé de réduction de l'émission de substances volatiles telles que l'ammoniac à partir d'une boue par un système mobile (1) selon l'une quelconque des revendications 1 à 7, **caractérisé en ce que** ledit procédé comprend les étapes suivantes c) le transport d'acide depuis un réservoir avant détachable (11) monté à l'avant d'un véhicule de traction (3), tel qu'un tracteur ou un camion, et;
Ajouter ledit acide à ladite boue pour former une substance à émission réduite, ladite quantité d'acide ajoutée à la boue étant calculée par une unité d'ordinateur, et de préférence ajustée en continu, sur la base d'une ou de plusieurs mesures de pH obtenues par un ou plusieurs capteurs de pH.

10. Procédé de réduction de l'émission de substances volatiles selon la revendication 9, **caractérisé en ce qu'**un additif est ajouté à ladite boue ou ladite substance réduite d'émission après changement de la totalité de ladite boue dans ladite substance à émission réduite, ledit additif étant de l'oxygène, de l'ozone, du peroxyde d'hydrogène, une solution de sulfate ferreux, ou des bactéries.

11. Procédé de réduction de l'émission de substances volatiles selon l'une quelconque des revendications 9 à 10 **caractérisé en ce que** ledit procédé comprend une étape supplémentaire; une étape supplémentaire consistant à transformer ladite substance à émission réduite en mousse.

12. Procédé de réduction de l'émission de substances volatiles selon l'une quelconque des revendications 9 à 11 **caractérisé en ce que** ladite substance à émission réduite est distribuée à un site d'application.

13. Procédé de réduction de l'émission de substances volatiles selon l'une quelconque des revendications 9 à 12 **caractérisé en ce que** ledit procédé comprend en outre des étapes de transport dudit acide dans une rigole à purin ou un réservoir avant.

14. Procédé de réduction de l'émission de substances volatiles selon la revendication 13, **caractérisé en ce que** ladite boue est en outre oxydée.

15. Procédé de réduction de l'émission de substances volatiles selon la revendication 14 **caractérisé en ce que** ledit procédé comprend une étape d'alerte automatique, ladite étape d'alerte automatique comprenant des sous-étapes consistant à
d) mesurer le pH d'une boue d'une rigole à purin conduisant à une valeur de pH
e) communiquer ladite valeur de pH à une unité informatique
f) à titre alternatif, corréler ladite valeur de pH avec une valeur seuil et informer un fournisseur en ce qui concerne le besoin d'un traitement acide, si ladite valeur de pH est supérieure audit seuil.
